Europäisches Patentamt

European Patent Office

Office européen des brevets

(11) Publication number: **0 451 958 B1**

## EUROPEAN PATENT SPECIFICATION

(45) Date of publication of patent specification: **07.12.94** (51) Int. Cl.5: **C01B 33/20**

(21) Application number: **91302087.1**

(22) Date of filing: **13.03.91**

(54) **Method for preparing zircon powder.**

(30) Priority: **16.03.90 JP 64026/90**
**19.09.90 JP 247060/90**
**18.12.90 JP 411264/90**

(43) Date of publication of application:
**16.10.91 Bulletin 91/42**

(45) Publication of the grant of the patent:
**07.12.94 Bulletin 94/49**

(84) Designated Contracting States:
**DE FR GB**

(56) References cited:
**EP-A- 0 302 368**

**ADVANCED CERAMIC MATERIALS, vol. 1, January 1986, pages 87-92, Columbus, Ohio,US; S. KOMARNENI et al.: "Hydrothermal route to ultrafine powders utilizing single and diphasic gels"**

**JOURNAL OF MATERIALS SCIENCE LETTERS, vol. 7, 1988, pages 386-388, Chapman and Hall Ltd.;Y.KANNO et al.: "Synthesis of fine spherical ZrO2-SiO2 particles by ultrasonic spray pyrolysis"**

(73) Proprietor: **Tosoh Corporation**
**4560, Kaisei-cho**
**Shinnanyo-shi, Yamaguchi-ken (JP)**

(72) Inventor: **Hoshino, Hirokuni**
**9, Urashimaoka,**
**Kanagawa-ku**
**Yokohama-shi, Kanagawa-ken (JP)**
Inventor: **Mori, Toshiyuki**
**906-12-203, Tokaichiba-cho,**
**Midori-ku**
**Yokohama-shi, Kanagawa-ken (JP)**
Inventor: **Yamamura, Hiroshi**
**2-2-306, Tsutsujigaoka,**
**Midori-ku**
**Yokohama-shi, Kanagawa-ken (JP)**
Inventor: **Kosugi, Naoki**
**2600, Kozukue-cho,**
**Kohoku-ku**
**Yokohama-shi, Kanagawa-ken (JP)**

(74) Representative: **Kearney, Kevin David Nicholas et al**
**KILBURN & STRODE**
**30 John Street**
**London, WC1N 2DD (GB)**

WORLD PATENTS INDEX, week 22, accession no. 78-39732A, Derwent PublicationsLtd, London, GB; & SU-A-564 268 (AS ARMN INORG CHEM) 23-08-1977

WORLD PATENTS INDEX, week 01, accession no. 74-01089V, Derwent Publications Ltd,London, GB; & SU-A-380 589 (URALSK SM KIROV POLYTECHN) priority date:12-07-1971; publication date not mentioned

**Description**

The present invention relates to a method for preparing zircon powder suitable for the production of a sintered product of zircon which is useful as a high temperature structural material.

As a method for preparing zircon powder, a method is known which comprises dissolving zirconium oxychloride in ethanol, adding an equimolar amount of tetraethoxysilane to obtain a solution mixture, drying the mixture and then calcining it at a temperature of at least 1,200°C (New Material Series "ZIRCON", p. 35-41, Rokakuho Uchida, compiled by Shigeyuki Somiya (1989)).

The powder prepared by this method has a high zircon-forming ratio as compared with the one obtained by calcining a mixture of $ZrO_2$ powder and $SiO_2$ powder, and when the calcination is conducted at a temperature of 1,700°C, the zircon-forming ratio is about 40% as quantitatively analyzed by an X-ray diffraction method. However, a sintered product produced by using such a zircon powder which still contains a large amount of unreacted raw materials, has such unreacted materials still remaining therein, although the content of unreacted silica and zirconia will be less than in the raw material zircon powder, and its composition tends to be non-uniform, whereby its high temperature characteristics tend to be poor, such being undesirable as a raw material for a high temperature structural material.

It is an object of the present invention to solve such a problem and to provide a method for preparing zircon powder having the content of unreacted raw materials minimized.

The present invention provides a method for preparing zircon powder, which comprises mixing (1) silica sol and (2) an aqueous zirconium oxychloride solution having a concentration which would be from 0.1 to 2 mols/ℓ after mixing with the silica sol, in a $SiO_2/ZrO_2$ molar ratio of from 0.95 to 1.10, heating the mixture to hydrolyze the zirconium oxychloride, followed by dehydration treatment to obtain a powder, heating the powder from room temperature to a calcination temperature over a period of from 0.7 to 30 hours and calcining the powder at a temperature of from 1,200 to 1,400°C for a period of time satisfying the relation of:

$$t \geq 116 - 0.08T$$

where t is the calcination time (hr) and T is the calcination temperature (°C), or heating the powder from room temperature to a calcination temperature over a period of from 0.8 to 70 hours and calcining the powder at a temperature higher than 1,400°C and not higher than 1,700°C for a period of time satisfying the relation of:

$$t \geq 18 - 0.01T$$

where t is the calcination time (hr) and T is the calcination temperature (°C).

The present invention will now be described in more detail.

(a) Blending of raw materials.

The aqueous zirconium oxychloride solution may be prepared by simply dissolving commercially available zirconium oxychloride in water. The concentration of zirconium oxychloride after mixing the aqueous zirconium oxychloride solution and the silica sol described below, must be from 0.1 to 2 mols/ℓ. If the concentration is too low, the hydrolysis tends to proceed too quickly, and zirconia and silica tend to be separated, whereby a zircon precursor having a Zr-O-Si bond tends to be hardly formed, and the particle size of the resulting zirconia tends to be so large that it becomes difficult to attain a uniformly mixed state with silica. When the concentration is at least 0.1 mol/ℓ, even if the hydrolysis is conducted under a boiling condition, the zircon precursor can be formed, and a uniform mixture can be obtained. However, if the concentration is too high, it takes a long time for the hydrolysis, thus leading to poor productivity, although a zircon precursor having a Zr-O-Si bond can still be formed by the hydrolysis. If the hydrolysis is conducted under such a condition that non-dissolved raw materials are present beyond the concentration for a saturated solution, it takes a long time for the hydrolysis, and it becomes difficult to attain a uniformly mixed state of zirconia and silica, whereby the zircon-forming ratio will be low in the subsequent calcination step.

The silica sol which is used may be a commercial product which may be used as it is. There is no particular restriction as to the concentration. However, it is preferred to use a solution containing silica at a concentration of from 10 to 30% by weight.

3

As is evident from the fact that zircon is represented by $SiO_2.ZrO_2$, the closer the blending ratio of these two solutions to 1 by the $SiO_2/ZrO_2$ molar ratio, the higher the purity of resulting zircon powder. In this connection, when this molar ratio is within a range of from 0.95 to 1.10, the product obtained by the present invention will be adequately pure, and it is possible to produce a high temperature structural material having adequate practical properties by sintering such a product. If the molar ratio is outside this range, the strength at high temperature tends to be poor, although the strength at room temperature may still be high. Further, conversion to zircon proceeds also by sintering, and if it is desired to obtain a sintered product in which the $SiO_2/ZrO_2$ molar ratio is closer to 1 than the zircon powder as the raw material for sintering, it is possible to add a supplementary amount of the material which is deficient in the raw material, in powder form before the sintering.

The aqueous zirconium oxychloride solution prepared to have a predetermined concentration and the silica sol are mixed to hydrolyze the zirconium oxychloride. This hydrolysis may be conducted based on the conditions commonly employed for the hydrolysis of zirconium oxychloride for a longer hydrolytic time i.e. by stirring at a temperature of from 80 to 100°C for at least 160 hours. The time for the hydrolysis varies depending upon the concentration of zirconium oxychloride and the temperature for the hydrolysis. Namely, a longer period of time is required when the concentration is higher and when the temperature is lower. For example, it takes 340 hours to completely hydrolyze a solution having a zirconium oxychloride concentration of 1.7 mols/ℓ at 100°C, while it takes 240 hours to completely hydrolyze a solution having a zirconium oxychloride concentration of 0.3 mol/ℓ at 100°C. However, in the case where a solution containing zirconium oxychloride only i.e. containing no silica sol, is hydrolyzed, it takes only 60 hours to completely hydrolyze the solution having a zirconium oxychloride concentration of 0.3 mol/ℓ at 100°C. Thus, the time required for completely hydrolyzing a solution containing both silica sol and zirconium oxychloride, is substantially longer than the time required for hydrolyzing a solution containing zirconium oxychloride only under the same conditions. This is believed to be attributable to the fact that during the hydrolytic reaction, the reaction for forming a zircon precursor having a Zr-O-Si bond proceeds slowly. The formation of such a zircon precursor having a Zr-O-Si bond is one of the reasons for the high zircon forming rate even at a relatively low temperature at a level of about 1,200°C.

Further, if a part of the hydrolyzate after the completion of the hydrolysis is added to the above silica sol and the aqueous zirconium oxychloride solution, and the mixture is hydrolyzed, the above mentioned time for hydrolysis can be shortened, and the amount of formation of the zircon precursor having a Zr-O-Si bond increases and in the subsequent calcination step, fine zircon powder can be obtained at a lower temperature in a shorter period of time, for some unknown reason. This effect becomes particularly distinct when the hydrolyzate is used in an amount of at least 0.5% by weight relative to the total amount of the silica sol and the aqueous zirconium oxychloride solution. However, if it exceeds 20% by weight, the rate of hydrolysis tends to be low. Also in this case, the concentration of zirconium oxychloride is from 0.1 to 2 mols per liter of the total volume of the silica sol and the aqueous zirconium oxychloride solution. The $SiO_2/ZrO_2$ molar ratio in the solution mixture comprising the silica sol, the aqueous zirconium oxychloride solution and the hydrolyzate must be from 0.95 to 1.10. The treatments subsequent to this hydrolysis may be conducted under the same conditions as in the case where only the silica sol and the aqueous zirconium oxychloride solution are employed. If this method of using a part of the hydrolyzate as a part of the raw material, is repeated, the effect of this method becomes more remarkable.

The hydrolyzate dispersion prepared as described above, is dehydrated to obtain a homogeneous mixture comprising the zircon precursor having a Zr-O-Si bond, silica and zirconia. This dehydration can be conducted by various methods. However, it is usually preferred to employ spray drying or evaporation to dryness under atmospheric pressure or under reduced pressure, since it is directed to treatment of fine powder dispersed in a large amount of a liquid.

(b) Calcination

When the powder mixture prepared as described above is calcined at a temperature of from 1,200 to 1,400°C, the mixture is heated from room temperature to the calcination temperature over a period of from 0.7 to 30 hours, and the calcination temperature and the calcination time are set to satisfy the relation of:

$$t \geq 116 - 0.08T$$

where
 t: calcination time (hr)
 T: calcination temperature (°C)

When the calcination is conducted at a temperature higher than 1,400°C and not higher than 1,700°C, the mixture is heated from room temperature to the calcination temperature over a period of from 0.8 to 70 hours, and the calcination temperature and the calcination time are set to satisfy the relation:

$$t \geq 18 - 0.01T$$

where

t: calcination time (hr)

T: calcination temperature (°C)

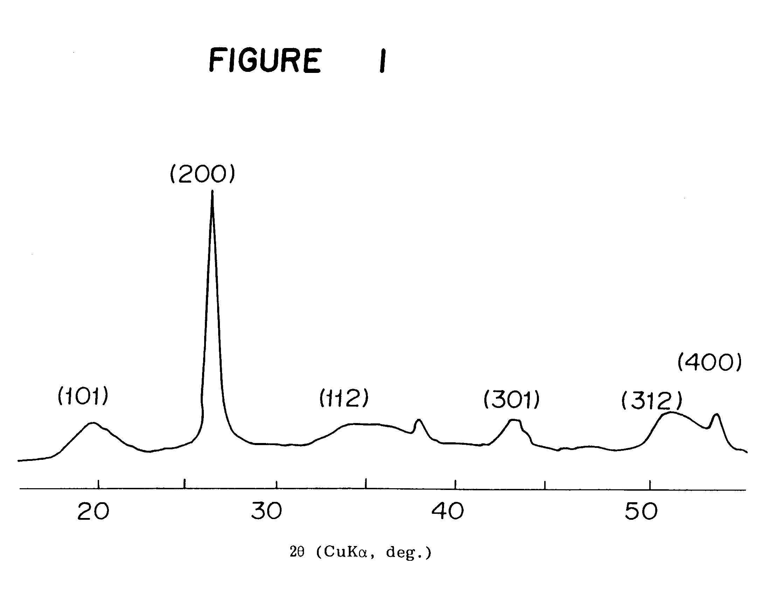

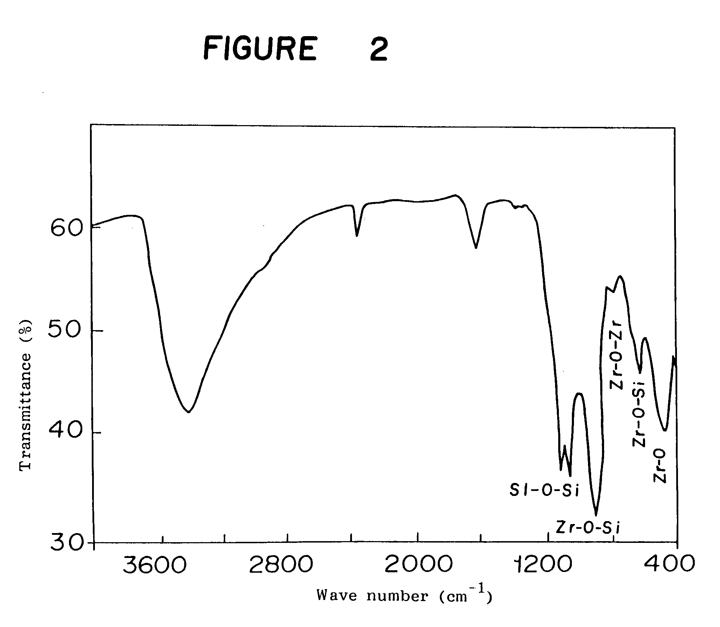

By such calcination, zircon powder can be obtained which contains a total of not more than 4 volume % of unreacted raw materials, as measured by an X-ray diffraction method. Using such zircon powder of high purity as the raw material, it is possible to obtain a sintered product having higher purity and good mechanical properties at both room temperature and high temperature. The X-ray diffraction pattern of the dried powder of the mixture after hydrolysis is specific to the crystal structure of zircon, as shown in Figure 1 of the accompanying drawings. The infrared absorption spectrum or this powder is as shown in Figure 2 of the accompanying drawings which indicates in addition to the absorption by the zircon precursor having a Zr-O-Si bond, absorptions by Si-O-Si and Zr-O-Zr attributable to unreacted raw material silica and zirconia. This indicates that during the hydrolytic reaction, the zircon precursor having a Zr-O-Si bond has formed in zirconia and silica. This zircon precursor serves as a seed crystal. However, at a temperature of lower than 1,200°C, the zircon-forming rate will not be high enough. On the other hand, if it exceeds 1,700°C, formed zircon is likely to decompose into silica and zirconia, such being undesirable.

To complete the zircon-forming reaction, it is thus necessary to conduct the calcination at a temperature of from 1,200 to 1,700°C for at least a predetermined period of time. In order to obtain zircon powder having good sinterability i.e. having a small particle size, it is preferred to conduct the calcination at a low temperature in a short period of time within the above conditions for calcination.

With respect to the temperature-raising rate up to the calcination temperature, it is necessary that in the case where the calcination is conducted at a temperature of from 1,200 to 1,400°C, the temperature is raised from room temperature to the calcination temperature over a period of from 0.7 to 30 hours and that in the case where the calcination is conducted at a temperature higher than 1,400°C and not higher than 1,700°C, the temperature is raised from room temperature to the calcination temperature over a period of from 0.8 to 70 hours. If the temperature is raised over a longer period of time than specified above, the zircon-forming ratio tends to decrease. This is believed to be attributable to the fact that formation of zircon by the reaction of zirconia and silica readily takes place when both zirconia and silica are in a non-crystalline state, and the crystallization temperatures of zirconia and silica are lower than the temperature for the conversion reaction of zirconia and silica to zircon, and accordingly, if the temperature-raising time is prolonged, the crystallization of zirconia and silica is likely to proceed prior to the conversion reaction to zircon of unreacted zirconia and silica existing around the zircon precursor having a Zr-O-Si bond, and the conversion reaction to zircon is thereby hindered. On the other hand, it is not practical to raise the temperature in a shorter period of time than the above specified range, since such is beyond the capacity of an ordinary furnace for calcination.

The mechanism for the effect of the present invention is not fully understood. However, it is considered that unreacted zirconia and silica surround and contact the zircon precursor having a Zr-O-Si bond formed during the hydrolysis, and conversion to zircon proceeds during the calcination step, whereby zircon powder having a high zircon-forming ratio will be formed.

As described in the foregoing, according to the present invention, highly pure zircon powder can readily be prepared.

The invention may be put into practice in various ways and a number of specific embodiments will be described to illustrate the invention with reference to the accompanying examples and comparative examples and the accompanying drawings, in which:

Figure 1 is the powder X-ray diffraction pattern of the powder mixture after drying and before calcination in an Example of the present invention; and

Figure 2 is the infrared absorption spectrum of the powder mixture in the same Example.

In the following Examples and Comparative Examples, the quantitative analyses of the components of the zircon powder products were made by the following formula from the area ratios of five peaks at (200) of zircon, (111) and (11-1) of monoclinic zirconia, (101) of tetragonal system zirconia and (101) of $\alpha$-cristobalite at $2\Theta = 18°$ to $32°$ by the X-ray diffraction analyses:

$$I_{ZR}(200)/\{I_{ZR}(200) + I_M(111) + I_M(11\text{-}1) + I_T(101) + I_C(101)\}$$

wherein I indicates the intensity of X-rays, ZR indicates zircon, M indicates monocyclic (monoclinic) zirconia, T indicates tetragonal system zirconia, C indicates $\alpha$-cristobalite and numerals in the bracket ( ) indicate miller indices.

### EXAMPLES 1 to 4 AND COMPARATIVE EXAMPLES 1 to 3

227.5 g of zirconium oxychloride octahydrate (manufactured by TOSOH CORPORATION, the same applies hereinafter) was dissolved in 2,000 mℓ of water to obtain an aqueous zirconium oxychloride solution having a concentration of 0.2 mol/ℓ. This aqueous zirconium oxychloride solution and 120.2 g of silica sol (manufactured by Nissan Chemical Co. Ltd., concentration: 20% by weight, the same applies hereinafter) were mixed in a separable flask ($SiO_2/ZrO_2$ molar ratio: 1.00) and subjected to heat treatment at 100°C for 168 hours under reflux. However, in Example 2, the hydrolyzed solution was added to the raw material solution mixture in an amount of 1% by weight, followed by heat treatment at 100°C for 150 hours under reflux. The obtained solution was, after addition of butanol, subjected to drying treatment at 80°C under reduced pressure.

The obtained powders were heated in the atmosphere to the calcination temperature in a predetermined time and maintained at the calcination temperature for a predetermined time to obtain zircon powder as set out in Table 1 below for Examples 1 to 4 and in Table 2 below for Comparative Examples 1 to 3.

### EXAMPLES 5 to 9 and COMPARATIVE EXAMPLE 4

455.0 g of zirconium oxychloride octahydrate was dissolved in 2,000 mℓ of water to obtain an aqueous zirconium oxychloride solution having a concentration of 0.4 mol/ℓ. This aqueous zirconium oxychloride solution and 240.3 g of silica sol were mixed in a separable flask ($SiO_2/ZrO_2$ molar ratio: 1.00) and subjected to heat treatment at 100°C for 240 hours under reflux. However, in Example 6, the hydrolyzed solution was added to the raw material solution mixture in an amount of 1% by weight, followed by heat treatment at 100°C for 210 hours under reflux. Further, in Example 7, the hydrolyzed solution was added to the raw material solution mixture in an amount of 10% by weight, followed by heat treatment at 100°C for 200 hours under reflux.

The obtained solution was, after an addition of butanol, subjected to drying treatment at 80°C under reduced pressure.

The conditions for calcination for Examples 5 to 9 were the same as in Examples 1 to 4 and are set out in Table 1 below and for Comparative Example 4 were the same as Comparative Examples 1 to 3 and are set out in Table 2 below.

### EXAMPLES 10 to 13 and COMPARATIVE EXAMPLES 5 to 7

909.9 g of zirconium oxychloride octahydrate was dissolved in 2,000 mℓ of water to obtain an aqueous zirconium oxychloride solution having a concentration of 0.8 mol/ℓ. This aqueous zirconium oxychloride solution and 480.8 g of silica sol were mixed in a separable flask ($SiO_2/ZrO_2$ molar ratio: 1.00) and subjected to heat treatment at 100°C for 336 hours under reflux. However, in Example 11, the hydrolyzed solution was added to the raw material solution mixture in an amount of 1% by weight, followed by heat treatment at 100°C for 310 hours under reflux.

The obtained solution was, after an addition of butanol, subjected to drying treatment at 80°C under reduced pressure.

The conditions for calcination for Examples 10 to 13 were the same as in Examples 1 to 4 and are set out in Table 1 below and for Comparative Examples 5 to 7 were as Comparative Examples 1 to 3 and are set out in Table 2 below.

### EXAMPLES 14 to 17 and COMPARATIVE EXAMPLES 8 to 10

1,933.5 g of zirconium oxychloride octahydrate was dissolved in 2,000 mℓ of water to obtain an aqueous zirconium oxychloride solution having a concentration of 1.7 mols/ℓ. This aqueous zirconium oxychloride solution and 1,021.6 g of silica sol were mixed in a separable flask ($SiO_2/ZrO_2$ molar ratio: 1.00) and subjected to heat treatment at 100°C for 384 hours under reflux. However, in Example 15, the hydrolyzed solution was added to the raw material solution mixture in an amount of 1% by weight, followed by heat treatment at 100°C for 370 hours under reflux.

The obtained solution was, after an addition of butanol, subjected to drying treatment at 80°C under reduced pressure.

The conditions for calcination (for Examples 14 to 17) were the same as in Examples 1 to 4 and are set out in Table 1 below and for Comparative Examples 8 to 10 were as Comparative Examples 1 to 3 and are set out in Table 2 below.

COMPARATIVE EXAMPLES 11 and 12

56.8 g of zirconium oxychloride octahydrate was dissolved in 2,000 m$\ell$ of water to obtain an aqueous zirconium oxychloride solution having a concentration of 0.05 mol/$\ell$. This aqueous zirconium oxychloride solution and 30.0 g of silica sol were mixed in a separable flask ($SiO_2/ZrO_2$ molar ratio: 1.00) and subjected to heat treatment at 100°C for 168 hours under reflux.

The obtained solution was, after an addition of butanol, subjected to drying treatment at 80°C under reduced pressure.

The obtained powder was heated in the atmosphere to the calcination temperature in a predetermined time and maintained at the calcination temperature for 8 hours to obtain zircon powder.

The above conditions and the results are shown in Tables 1 and 2. In these Tables, ZOC represents the aqueous zirconium oxychloride solution, and ZR represents zircon (the same applies in Table 3).

EXAMPLES 18 and 19 and COMPARATIVE EXAMPLES 13 and 14

Zircon powders were obtained under the same conditions as in Example 5 except that the amount of the same silica sol as used in Example 5 was changed. These powders and the powder obtained in Example 5 were, respectively, molded and calcined at 1,680°C for 4 hours to obtain sintered products, which were processed to obtain test pieces having a size of 3 × 4 × 40 mm, whereupon a three point flexural strength was measured. These conditions and the results are shown in Table 3. In Table 3, the value for room temperature three point flexural strength is an average value with respect to ten test pieces, and the value for 1,400°C three point flexural strength is an average value with respect to three test pieces.

Table 1

| Example No. | ZOC concentration [1] (mol/$\ell$) | Calcination temp. (°C) | Temp. raising time (hr) | Calcination time (hr) | Purity of formed ZR (vol %) |
|---|---|---|---|---|---|
| 1 | 0.19 | 1,350 | 22 | 8 | 96 |
| 2 | 0.19 | 1,250 | 1.1 | 8 | 96 |
| 3 | 0.19 | 1,500 | 49 | 6 | 98 |
| 4 | 0.19 | 1,500 | 1.2 | 4 | 99 |
| 5 | 0.36 | 1,350 | 22 | 10 | 96 |
| 6 | 0.36 | 1,250 | 1.1 | 8 | 98 |
| 7 | 0.36 | 1,250 | 1.1 | 4 | 97 |
| 8 | 0.36 | 1,500 | 49 | 8 | 97 |
| 9 | 0.36 | 1,500 | 1.1 | 6 | 100 |
| 10 | 0.67 | 1,350 | 22 | 8 | 100 |
| 11 | 0.67 | 1,300 | 1.1 | 8 | 100 |
| 12 | 0.67 | 1,500 | 49 | 4 | 100 |
| 13 | 0.67 | 1,500 | 1.2 | 4 | 100 |
| 14 | 1.21 | 1,350 | 22 | 8 | 97 |
| 15 | 1.21 | 1,250 | 1.1 | 8 | 98 |
| 16 | 1.21 | 1,500 | 49 | 4 | 98 |
| 17 | 1.21 | 1,500 | 1.2 | 4 | 100 |

**Note on Table 1**

[1] After mixing with silica sol.

Table 2

| Compara-<br>tive<br>Example<br>No. | ZOC<br>concentra-<br>tion<br>(mol/$\ell$) | Calcina-<br>tion<br>temp.<br>(°C) | Temp.<br>raising<br>time<br>(hr) | Calcina-<br>tion time<br>(hr) | Purity of<br>formed ZR<br>(vol %) |
|---|---|---|---|---|---|
| 1 | 0.19[1] | 1,150 | 1.0 | 8 | 40 |
| 2 | 0.19[1] | 1,350 | 1.1 | 1 | 83 |
| 3 | 0.19[1] | 1,500 | 80 | 10 | 92 |
| 4 | 0.36[1] | 1,500 | 80 | 10 | 92 |
| 5 | 0.67[1] | 1,150 | 1.0 | 8 | 75 |
| 6 | 0.67[1] | 1,350 | 1.1 | 1 | 92 |
| 7 | 0.67[1] | 1,500 | 80 | 10 | 93 |
| 8 | 1.21[1] | 1,150 | 1.0 | 8 | 78 |
| 9 | 1.21[1] | 1,350 | 1.1 | 1 | 90 |
| 10 | 1.21[1] | 1,500 | 80 | 10 | 92 |
| 11 | 0.05 | 1,350 | 1.1 | 8 | 70 |
| 12 | 0.05 | 1,500 | 1.2 | 8 | 85 |

**Note on Table 2**

[1] After mixing with silica sol.

Table 3

| | ZOC concentra-tion (mol/ℓ) | SiO$_2$/ZrO$_2$ molar ratio | Purity of formed ZR (vol %) | Room temp. three point flexural strength (MPa) | 1,400°C three point flexural strength (MPa) |
|---|---|---|---|---|---|
| Example 5 | 0.36 ' | 1.00 | 96 | 320 | 325 |
| 18 | 0.36 ' | 0.96 | 96 | 305 | 308 |
| 19 | 0.36 ' | 1.08 | 96 | 314 | 310 |
| Comparative Example 13 | 0.37 | 0.93 | 92 | 305 | 210 |
| 14 | 0.35 | 1.12 | 94 | 308 | softened |

Note on Table 3

' After mixing with silica sol.

Claims

1. A method for preparing zircon powder, which comprises mixing (1) silica sol and (2) an aqueous zirconium oxychloride solution having a concentration which would be from 0.1 to 2 mols/ℓ after mixing with the silica sol, in a SiO$_2$/ZrO$_2$ molar ratio of from 0.95 to 1.10, heating the mixture to hydrolyze the zirconium oxychloride, followed by dehydration treatment to obtain a powder, heating the powder from room temperature to a calcination temperature over a period of from 0.7 to 30 hours and calcining the powder at a temperature of from 1,200 to 1,400°C for a period of time satisfying the relation of:

$t \geq 116 - 0.08T$

where t is the calcination time in hours and T is the calcination temperature in degrees Centigrade, or heating the powder from room temperature to a calcination temperature over a period of from 0.8 to 70 hours and calcining the powder at a temperature higher than 1,400°C and not higher than 1,700°C for a period of time satisfying the relation of:

$t \geq 18 - 0.01T$

where t is the calcination time in hours and T is the calcination temperature in degrees Centigrade.

2. A method for preparing zircon powder, which comprises mixing (1) silica sol, (2) an aqueous zirconium oxychloride solution containing from 0.1 to 2 mols of zirconium oxychloride per litre of the total volume of this solution and the said silica sol and (3) a hydrolyzate of a solution mixture comprising silica sol and an aqueous zirconium oxychloride solution, so that the SiO$_2$/ZrO$_2$ molar ratio would be from 0.95 to 1.10, the said hydrolyzate (3) being present in an amount of from 0.5 to 20% by weight relative to the total amount of the said silica sol (1) and the said aqueous zirconium oxychloride solution (2), heating the mixture to hydrolyze the zirconium oxychloride, followed by dehydration treatment to obtain a powder, heating the powder from room temperature to a calcination temperature over a period of from

10

0.7 to 30 hours and calcining the powder at a temperature of from 1,200 to 1,400°C for a period of time satisfying the relation of:

$$t \geq 116 - 0.08T$$

where t is the calcination time in hours and T is the calcination temperature in degrees Centigrade, or heating the powder from room temperature to a calcination temperature over a period of from 0.8 to 70 hours and calcining the powder at a temperature higher than 1,400°C and not higher than 1,700°C for a period of time satisfying the relation of:

$$t \geq 18 - 0.01T$$

where t is the calcination time in hours and T is the calcination temperature in degrees Centigrade.

**Patentansprüche**

1. Verfahren zur Herstellung von Zirkonpulver, umfassend das Vermischen von (1) Silicasol und (2) einer wässrigen Zirkoniumoxichloridlösung mit einer Konzentration, die nach dem Vermischen mit dem Silicasol von 0,1 bis 2 Mol/l betragen würde, in einem $SiO_2/ZrO_2$-Molverhältnis von 0,95 bis 1,10, das Erhitzen der Mischung, um das Zirkoniumoxychlorid zu hydrolysieren, gefolgt von einer Entwässerungsbehandlung, um ein Pulver zu erhalten, Erhitzen des Pulvers von Zimmertemperatur bis zu einer Kalzinierungtemperatur über einen Zeitraum von 0,7 bis 30 Stunden und Kalzinierung des Pulvers bei einer Temperatur von 1.200 bis 1.400 °C während einer Zeitdauer, die folgende Beziehung erfüllt:

$$t \geq 116 - 0,08T$$

wobei t für die Kalzinierungszeit in Stunden steht und T die Kalzinierungstemperatur in °C angibt, oder Erhitzen des Pulvers von Zimmertemperatur bis zu einer Kalzinierungstemperatur über einen Zeitraum von 0,8 bis 70 Stunden und Kalzinierung des Pulvers bei einer Temperatur über 1.400 °C und nicht höher als 1.700 °C während einer Zeitdauer, die folgende Beziehung erfüllt:

$$t \geq 18 - 0,01T$$

wobei t für die Kalzinierungszeit in Stunden steht und T für die Kalzinierungstemperatur in °C steht.

2. Verfahren zur Herstellung von Zirkonpulver, umfassend das Vermischen von (1) Silicasol, (2) einer wässrigen Zirkoniumoxichloridlösung, die 0,1 bis 2 Mol Zirkoniumoxichlorid pro Liter des Gesamtvolumens dieser Lösung und des erwähnten Silicasols enthält und (3) einem Hydrolysat von einem Lösungsgemisch, das Silicasol und eine wässrige Zirkoniumoxichloridlösung umfaßt, und zwar so, daß das $SiO_2/ZrO_2$ Molverhältnis von 0,95 bis 1,10 betragen würde, wobei das Hydrolysat (3) in einer Menge von 0,5 bis 20 Gew.-%, bezogen auf die Gesamtmenge des erwähnten Silicasols (1) und der erwähnten wässrigen Zirkoniumoxichloridlösung (2) vorliegt, das Erhitzen der Mischung, um das Zirkoniumoxichlorid zu hydrolysieren, gefolgt von einer Entwässerungsbehandlung, um ein Pulver zu erhalten, Erhitzen des Pulvers von Zimmertemperatur bis zu einer Kalzinierungstemperatur über einen Zeitraum von 0,7 bis 30 Stunden und Kalzinierung des Pulvers bei einer Temperatur von 1.200 bis 1.400 °C während einer Zeitdauer, die folgende Beziehung erfüllt:

$$t \geq 116 - 0.08T$$

wobei t für die Kalzinierungszeit in Stunden steht und T für die Kalzinierungstemperatur in °C steht, oder Erhitzen des Pulvers von Zimmertemperatur bis zu einer Kalzinierungstemperatur über einen Zeitraum von 0,8 bis 70 Stunden und Kalzinierung des Pulvers bei einer Temperatur, die über 1400 °C liegt und nicht höher ist als 1.700 °C während einer Zeitdauer, die folgende Beziehung erfüllt:

$$t \geq 18 - 0.01T$$

wobei t für die Kalzinierungszeit in Stunden steht und T für die Kalzinierungstemperatur in °C steht.

**Revendications**

1. Procédé pour préparer une poudre de zircon, qui comprend les étapes consistant à mélanger (1) un sol de silice et (2) une solution aqueuse d'oxychlorure de zirconium ayant une concentration de 0,1 à 2 moles/l après mélange avec le sol de silice, selon un rapport molaire $SiO_2/ZrO_2$ de 0,95 à 1,10, à chauffer le mélange afin d'hydrolyser l'oxychlorure de zirconium, en faisant suivre par un traitement de déshydratation pour obtenir une poudre, à chauffer la poudre depuis la température ambiante jusqu'à une température de calcination en un laps de temps de 0,7 à 30 heures, et à calciner la poudre à une température de 1200°C à 1400°C pendant un laps de temps satisfaisant à la relation suivante :

   $$t \geq 116 - 0,08T$$

   dans laquelle t désigne la durée de calcination (en heures) et T désigne la température de calcination (en °C), ou bien à chauffer la poudre depuis la température ambiante jusqu'à une température de calcination en un laps de temps de 0,8 à 70 heures et à calciner la poudre à une température supérieure à 1400°C et non supérieure à 1700°C pendant un laps de temps satisfaisant à la relation suivante :

   $$t \geq 18 - 0,01T$$

   dans laquelle t désigne la durée de calcination (en heures) et T désigne la température de calcination (en °C).

2. Procédé pour préparer une poudre de zircon, qui comprend les étapes consistant à mélanger (1) un sol de silice, (2) une solution aqueuse d'oxychlorure de zirconium contenant de 0,1 à 2 modes d'oxychlorure de zirconium par litre du volume total de cette solution et dudit sol de silice, et (3) un hydrolysat d'un mélange en solution comprenant un sol de silice et une solution aqueuse d'oxychlorure de zirconium, de telle façon que le rapport molaire $SiO_2 2/ZrO_2$ soit de 0,95 à 1,10, ledit hydrolysat (3) étant présent en une quantité de 0,5 à 20 % en poids par rapport à la quantité totale dudit sol de silice (1) et de ladite solution aqueuse d'oxychlorure de zirconium (2), à chauffer le mélange pour hydrolyser l'oxychlorure de zirconium, en faisant suivre par un traitement de déshydratation pour obtenir une poudre, à chauffer la poudre depuis la température ambiante jusqu'à une température de calcination en un laps de temps de 0,7 à 30 heures, et à calciner la poudre à une température de 1200°C à 1400°C pendant un laps de temps satisfaisant à la relation suivante :

   $$t \geq 116 - 0,08T$$

   dans laquelle t désigne la durée de calcination (en heures) et T désigne la température de calcination (en °C), ou bien à chauffer la poudre depuis la température ambiante jusqu'à une température de calcination en un laps de temps de 0,8 à 70 heures et à calciner la poudre à une température supérieure à 1400°C et non supérieure à 1700°C pendant un laps de temps satisfaisant à la relation suivante :

   $$t \geq 18 - 0,01T$$

   dans laquelle t désigne la durée de calcination (en heures) et T désigne la température de calcination (en °C).

# FIGURE I

(200)

(400)

(101)          (112)          (301)          (312)

20          30          40          50

2θ (CuKα, deg.)

## FIGURE 2